# EUROPEAN PATENT APPLICATION

(11) **EP 4 593 336 A1**
(43) Date of publication of application: **30.07.2025**
(21) Application number: 22959086.4
(22) Date of filing: 21.09.2022
(51) Int. Cl.: H04L 27/00

(54) **PHYSICAL UPLINK CONTROL CHANNEL SENDING METHOD AND APPARATUS, AND PHYSICAL UPLINK CONTROL CHANNEL RECEIVING METHOD AND APPARATUS**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2022/120262
(87) International publication number: WO 2024/060075

(57) **Abstract**

The present application relates to a physical uplink control channel (PUCCH) sending method and apparatus, and a PUCCH receiving method and apparatus. The PUCCH sending method comprises: determining a full-duplex slot for full-duplex communication; and according to PUCCH configuration information sent by a network device, sending a PUCCH to the network device in the full-duplex slot. According to the recitation of the present application, the PUCCH configuration information sent by the network device can be used for a terminal to determine how to send the PUCCH in the full-duplex slot, so that the terminal can send the PUCCH to the network device in the full-duplex slot according to the PUCCH, for example, the terminal can send the PUCCH to the network device in an uplink sub-band of a downlink slot, and is not limited to sending the PUCCH to the network device in an uplink slot, thereby facilitating the improvement of the flexibility of uplink communication of the terminal.

## Description

### FIELD

The present disclosure relates to the field of communication technologies, and in particular relates to a method and an apparatus for sending a physical uplink control channel (PUCCH), a method and an apparatus for receiving a PUCCH, a communication apparatus and a computer-readable storage medium.

### BACKGROUND

In order to improve communication efficiency, full-duplex communication is proposed in the related art. For example, an uplink (UL) subband is configured for a terminal in a downlink (DL) slot, such that the terminal may send information to a network device in the UL subband of the DL slot, and may also receive information sent by the network device in a part other than the UL subband in the DL slot, thereby achieving the full-duplex communication.

Although the terminal may perform UL communication in the DL slot based on the full-duplex communication, the base station does not expect the terminal to send a physical uplink control channel (PUCCH) in the DL slot based on a current protocol, and thus the terminal may only send the PUCCH in a UL slot. This limits the flexibility of the terminal for uplink communication.

### SUMMARY

In view of this, embodiments of the present disclosure provide a method and an apparatus for sending a physical uplink control channel (PUCCH), a method and an apparatus for receiving the PUCCH, a communication apparatus and a computer-readable storage medium to solve the technical problem in the related art.

According to a first aspect of embodiments of the present disclosure, there is provided a method for sending a PUCCH, performed by a terminal, including: determining a full duplex slot for full duplex communication; and sending the PUCCH to a network device in the full duplex slot according to PUCCH configuration information sent by the network device.

According to a second aspect of embodiments of the present disclosure, there is provided a method for receiving a PUCCH, performed by a network device, including: determining a full duplex slot for full duplex communication of a terminal; and receiving the PUCCH sent by the terminal in the full duplex slot according to PUCCH configuration information sent to the terminal.

According to a third aspect of embodiments of the present disclosure, there is provided a transceiving system for a PUCCH, including a terminal and a network device, in which the terminal is configured to implement the method for sending the PUCCH described above, and the network device is configured to implement the method for receiving the PUCCH described above.

According to a fourth aspect of embodiments of the present disclosure, there is provided an apparatus for sending a PUCCH, including: a processing module configured to determine a full duplex slot for full duplex communication; and a sending module configured to send the PUCCH to a network device in the full duplex slot according to PUCCH configuration information sent by the network device.

According to a fifth aspect of embodiments of the present disclosure, there is provided an apparatus for receiving a PUCCH, including: a processing module configured to determine a full duplex slot for full duplex communication of a terminal; and a receiving module configured to receive the PUCCH sent by the terminal in the full duplex slot according to PUCCH configuration information sent to the terminal.

According to a sixth aspect of embodiments of the present disclosure, there is provided a communication apparatus, including: a processor; and a memory for storing a computer program, in which the computer program, when executed by the processor, implements the method for sending the PUCCH described above.

According to a seventh aspect of embodiments of the present disclosure, there is provided a communication apparatus, including: a processor; and a memory for storing a computer program, in which the computer program, when executed by the processor, implements the method for receiving the PUCCH described above.

According to an eighth aspect of embodiments of the present disclosure, there is provided a computer-readable storage medium, configured to store a computer program that, when executed by a processor, implements the method for sending the PUCCH described above.

According to a ninth aspect of embodiments of the present disclosure, there is provided a computer-readable storage medium, configured to store a computer program that, when executed by a processor, implements the method for receiving the PUCCH described above.

According to embodiments of the present disclosure, the PUCCH configuration information sent by the network device may be applicable to how the terminal determines to send the PUCCH in the full duplex slot, such that the terminal may send the PUCCH to the network device in the full duplex slot according to the PUCCH. For example, the terminal may send the PUCCH to the network device in an uplink subband of a downlink slot, rather than only sending the PUCCH to the network device in an uplink slot, which is beneficial to improving the flexibility of the terminal for uplink communication.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions only relate to part embodiments of the present disclosure, and for those skilled in the art, other drawings may be obtained according to these drawings without creative labor.
FIG. 1 is a schematic flow chart illustrating a method for sending a physical uplink control channel (PUCCH) according to an embodiment of the present disclosure.
FIG. 2A is a schematic diagram illustrating a relationship of frequency domain resources according to an embodiment of the present disclosure.
FIG. 2B is a schematic diagram illustrating another relationship of frequency domain resources according to an embodiment of the present disclosure.
FIG. 2C is a schematic diagram illustrating another relationship of frequency domain resources according to an embodiment of the present disclosure.
FIG. 3 is a schematic flow chart illustrating another method for sending a PUCCH according to an embodiment of the present disclosure.
FIG. 4 is a schematic diagram illustrating a slot structure according to an embodiment of the present disclosure.
FIG. 5 is a schematic flow chart illustrating another method for sending a PUCCH according to an embodiment of the present disclosure.
FIG. 6 is a schematic flow chart illustrating another method for sending a PUCCH according to an embodiment of the present disclosure.
FIG. 7 is a schematic diagram illustrating a second frequency domain starting position according to an embodiment of the present disclosure.
FIG. 8 is a schematic flow chart illustrating another method for sending a PUCCH according to an embodiment of the present disclosure.
FIG. 9 is a schematic diagram illustrating another second frequency domain starting position according to an embodiment of the present disclosure.
FIG. 10 is a schematic flow chart illustrating another method for sending a PUCCH according to an embodiment of the present disclosure.
FIG. 11 is a schematic diagram illustrating another second frequency domain starting position according to an embodiment of the present disclosure.
FIG. 12 is a schematic flow chart illustrating a method for receiving a PUCCH according to an embodiment of the present disclosure.
FIG. 13 is a schematic block diagram illustrating an apparatus for sending a PUCCH according to an embodiment of the present disclosure.
FIG. 14 is a schematic block diagram illustrating an apparatus for receiving a PUCCH according to an embodiment of the present disclosure.
FIG. 15 is a schematic block diagram illustrating an apparatus for sending a PUCCH according to an embodiment of the present disclosure.
FIG. 16 is a schematic block diagram illustrating an apparatus for receiving a PUCCH according to an embodiment of the present disclosure.

### DETAILED DESCRIPTION

The technical solutions in embodiments of the present disclosure will be described clearly and completely below with reference to the accompanying drawings in the embodiments of the present disclosure. Apparently, the described embodiments are only some embodiments of the present disclosure, rather than all embodiments of the present disclosure. All other embodiments obtained by those of ordinary skill in the art based on the embodiments of the present disclosure without making creative works belong to the protection scope of the present disclosure.

Terms used herein in the embodiments of the present disclosure are only for the purpose of describing specific embodiments, but should not be construed to limit the embodiments of the present disclosure. As used in the embodiments of the present disclosure and the appended claims, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

For purposes of brevity and ease of understanding, the terms used herein for describing the relationship of size are "greater than" or "less than", "higher than" or "lower than". However, it may be understood to those skilled in the art that the term "greater than" also encompasses the meaning of "greater than or equal to", the term "less than" also encompasses the meaning of "less than or equal to"; the term "higher than" encompasses the meaning of "higher than or equal to", and the term "lower than" also encompasses the meaning of "lower than or equal to".

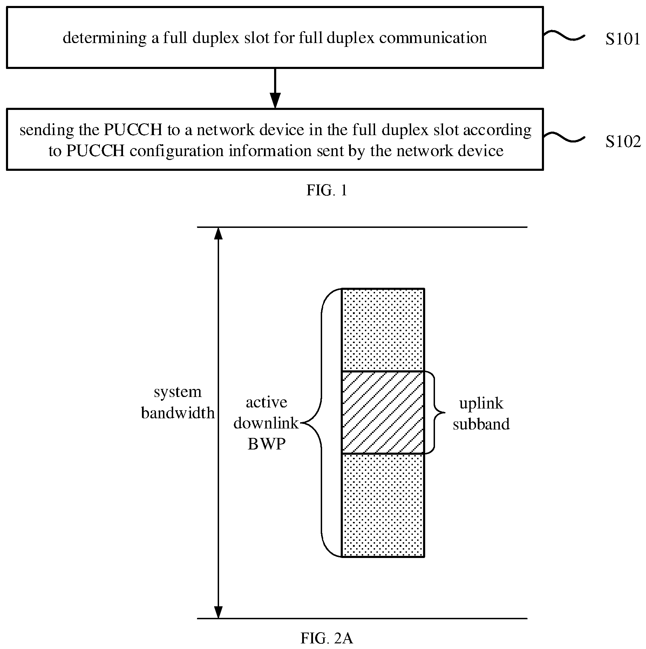

FIG. 1 is a schematic flow chart illustrating a method for sending a physical uplink control channel (PUCCH) according to an embodiment of the present disclosure. The method for sending the PUCCH shown in this embodiment may be performed by a terminal. The terminal includes, but is not limited to, a communication apparatus such as a mobile phone, a tablet computer, a wearable device, a sensor, an Internet of Things device, etc. The terminal may communicate with a network device including, but not limited to, network devices in 4G, 5G, 6G, etc. communication systems, such as a base station, a core network, etc.

As shown in FIG. 1, the method for sending the PUCCH may include the following steps.

In step S101, a full duplex slot for full duplex communication is determined.

In step S102, the PUCCH is sent to the network device in the full duplex slot according to PUCCH configuration information sent by the network device.

In an embodiment, the terminal may first determine the full duplex slot for the full duplex communication, which may also be referred to as a subband full duplex (SBFD) slot.

The full duplex slot includes at least one of:
a downlink slot including an uplink subband;
a flexible slot including an uplink subband;
an uplink slot including a downlink subband; or
a flexible slot including a downlink subband.

For example, in the downlink slot including the uplink subband, the terminal may perform uplink communication in the uplink subband and perform downlink communication in a frequency domain resource other than the uplink subband, thereby implementing the full duplex communication. For example, in the flexible slot including the uplink subband, the terminal may perform the uplink communication in the uplink subband and perform the downlink communication in a frequency domain resource other than the uplink subband, thereby implementing the full duplex communication. For example, in the uplink slot including the downlink subband, the terminal may perform the downlink communication in the downlink subband and perform the uplink communication in a frequency domain resource other than the downlink subband, thereby implementing the full duplex communication. For example, in the flexible slot including the downlink subband, the terminal may perform the downlink communication in the downlink subband and perform the uplink communication in a frequency domain resource other than the downlink subband, thereby implementing the full duplex communication.

According to embodiments of the present disclosure, the PUCCH configuration information sent by the network device is applicable to how the terminal determines to send the PUCCH in the full duplex slot, such that the terminal may send the PUCCH to the network device in the full duplex slot according to the PUCCH. For example, the terminal may send the PUCCH to the network device in the uplink subband of the downlink slot, rather than only sending the PUCCH to the network device in the uplink slot, which is beneficial to improving the flexibility of the terminal for the uplink communication.

In an embodiment, the PUCCH configuration information may be a PUCCH configuration information set (or referred to as a PUCCH resource set) that includes multiple pieces of PUCCH configuration information, and each piece of PUCCH configuration information includes, but is not limited to, a time domain resource, a frequency domain resource (e.g. a frequency domain starting position, a frequency domain resource range), hop information and the like of the PUCCH.

In an embodiment, the PUCCH configuration information includes the PUCCH configuration information set, and sending the PUCCH to the network device in the full duplex slot includes: determining the PUCCH configuration information in the PUCCH configuration information set; and sending the PUCCH to the network device in the full duplex slot according to the PUCCH configuration information determined.

The terminal determines the PUCCH configuration information in the PUCCH configuration information set, and the terminal may determine the PUCCH configuration information autonomously, or according to an instruction of the network device.

Moreover, regarding how to determine the full duplex slot, it may be set according to needs, including, but not limited to, the modes shown in the following embodiments.

In an embodiment, the network device may first configure a transmission direction of a first slot via first information, for example, as a first transmission direction. The first information includes, but is not limited to, a time division duplexing (TDD) UL-DL configuration, and a slot format indication (SFI). The first information in this embodiment is at a carrier level, that is, the first information is applicable to all bandwidth parts (BWPs) in the same carrier. Based on the first information, the terminal may determine whether the first slot is the uplink slot (the first transmission direction is uplink) or the downlink slot (the first transmission direction is downlink).

In a subsequent communication process, the network device may adjust a transmission direction of the terminal in the first slot via second information. For example, the network device may indicate that the transmission direction of the terminal in the first slot is a second transmission direction via the second information. The second information may be a dynamic scheduling signaling or semi-static configuration information such as a radio resource control (RRC) signaling.

Since the second transmission direction is different from the first transmission direction, the terminal may determine that the first slot is the full duplex slot in a case that it is determined that the transmission direction in the first slot is the second transmission direction via the second information. For example, in a case that the first transmission direction is uplink and the second transmission direction is downlink, it may be determined that the full duplex slot is the uplink slot including the downlink subband; and in a case that the first transmission direction is downlink and the second transmission direction is uplink, it may be determined that the full duplex slot is the downlink slot including the uplink subband.

In an embodiment, the network device may first configure the transmission direction of the first slot, for example, as the first transmission direction, via a TDD UL-DL configuration of a cell. The TDD UL-DL configuration of the cell is at a cell level (the carrier level) and is the same for all the BWPs in the same carrier. Based on the first information, the terminal may determine whether the first slot is the uplink slot (the first transmission direction is uplink) or the downlink slot (the first transmission direction is downlink).

In the subsequent communication process, the network device may adjust the transmission direction of the terminal in the first slot via a TDD UL-DL configuration of a preset BWP pair. For example, the network device may indicate that the transmission direction of the terminal in the first slot is the second transmission direction via the TDD UL-DL configuration of the preset BWP pair. The TDD UL-DL configuration of the preset BWP pair is at a BWP level, that is, it may be different for different BWPs.

It should be noted that, in this case, the terminal may maintain two active BWP pairs, one is the preset BWP pair, and the other is a BWP pair other than the preset BWP pair, which may be referred to as a normal BWP pair. The two BWP pairs may correspond to different TDD UL-DL configurations, and the terminal determines the transmission direction in the first slot according to the TDD UL-DL configuration of the preset BWP pair.

Frequency domain resources corresponding to an uplink BWP and a downlink BWP in the two BWP pairs may be the same or different. Regarding communication in the full duplex slot, the frequency domain resource is determined according to the frequency domain resources corresponding to the uplink BWP and/or the downlink BWP in the preset BWP pair. Moreover, regarding communication in a non-full-duplex slot, the frequency domain resource is determined according to frequency domain resources corresponding to an uplink BWP and/or a downlink BWP in the normal BWP pair.

The network device may further indicate the preset BWP pair in at least one BWP pair by sending indication information. Since the network device may send the TDD UL-DL configuration at the BWP level to the terminal, each BWP pair respectively corresponds to a TDD UL-DL configuration. Therefore, the network device needs to inform the terminal of a preset BWP pair in multiple BWP pairs via the indication information, such that the terminal determines the second transmission direction according to the TDD UL-DL configuration of the preset BWP pair. The preset BWP pair may be referred to as a reference BWP pair or an SBFD BWP pair.

Since the second transmission direction is different from the first transmission direction, the terminal may determine that the first slot is the full duplex slot in a case that it is determined that the transmission direction in the first slot is the second transmission direction according to the second information. For example, it may be determined that the full duplex slot is the uplink slot including the downlink subband in a case that the first transmission direction is uplink and the second transmission direction is downlink; and it may be determined that the full duplex slot is the downlink slot including the uplink subband in a case that the first transmission direction is downlink and the second transmission direction is uplink.

In an embodiment, it may be specified that a full duplex operation is performed on a semi-static time domain resource (e.g. a symbol, a slot) of a TDD band or on a time domain resource indicated by the SFI, then a slot included in the time domain resource or a slot where the time domain resource is located may be referred to as the full duplex slot.

The semi-static time domain resource may be determined according to a tdd-UL-DL-Configuration Common signaling sent by a base station, or may be determined according to a tdd-UL-DL-Configuration Common signaling and a tdd-UL-DL-ConfigurationDedicated signaling sent by a base station.

Further, the network device may indicate the transmission direction (e.g., the uplink communication, the downlink communication, etc.) on the full duplex slot. For example, taking a downlink time domain resource as an example, the transmission direction of the terminal on the downlink time domain resource may be indicated in the following two modes.

Mode 1: in the downlink time domain resource, the network device configures the UL subband or the DL subband for the terminal. The terminal may only perform uplink transmission in the UL subband, and may only perform uplink reception in the DL subband. Mode 2: in the downlink time domain resource, the network device configures the UL subband or the DL subband for the terminal, and performs an indication of a reference signal or a scheduling of a data channel in the UL subband or the DL subband, and the terminal determines to perform the uplink communication or the downlink communication according to the indication.

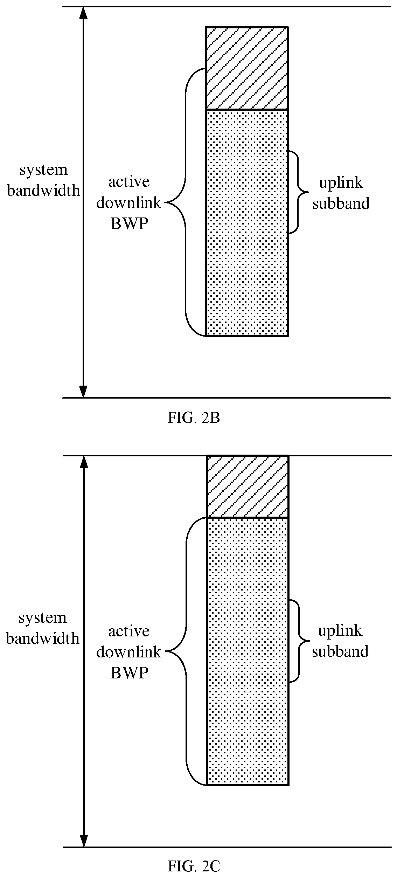

FIG. 2A is a schematic diagram illustrating a relationship of frequency domain resources according to an embodiment of the present disclosure. FIG. 2B is a schematic diagram illustrating another relationship of frequency domain resources according to an embodiment of the present disclosure. FIG. 2C is a schematic diagram illustrating another relationship of frequency domain resources according to an embodiment of the present disclosure.

In an embodiment, the full duplex slot includes a downlink slot including an uplink subband, in which the uplink subband is wholly included in an active downlink BWP, or partly included in an active downlink BWP, or not included in an active downlink BWP.

As shown in FIGS. 2A to 2C, taking the downlink slot including the uplink subband as an example, a relationship between the uplink subband and a frequency domain resource (e.g., a downlink BWP) of the downlink slot is illustratively described.

As shown in FIG. 2A, the active downlink BWP is within a system bandwidth, and the uplink subband is wholly within the active downlink BWP. As shown in FIG. 2B, the active downlink BWP is within the system bandwidth, a part of the uplink subband is within the active downlink BWP, and another part of the uplink subband is outside the active downlink BWP. As shown in FIG. 2C, the active downlink BWP is within the system bandwidth, and the uplink subband is wholly outside the active downlink BWP.

Furthermore, the frequency domain resource for sending the PUCCH and determined according to the PUCCH configuration information may be wholly within the uplink subband, or partially within the uplink subband, or wholly outside the uplink subband, which is not limited in the present disclosure. In a case that the frequency domain resource for sending the PUCCH is outside the uplink subband, the frequency domain resource may be directly configured to send the PUCCH without adjustment, or may be further adjusted such that the frequency domain resource adjusted is within the uplink subband and then configured to send the PUCCH. This will be specifically explained in the subsequent embodiments.

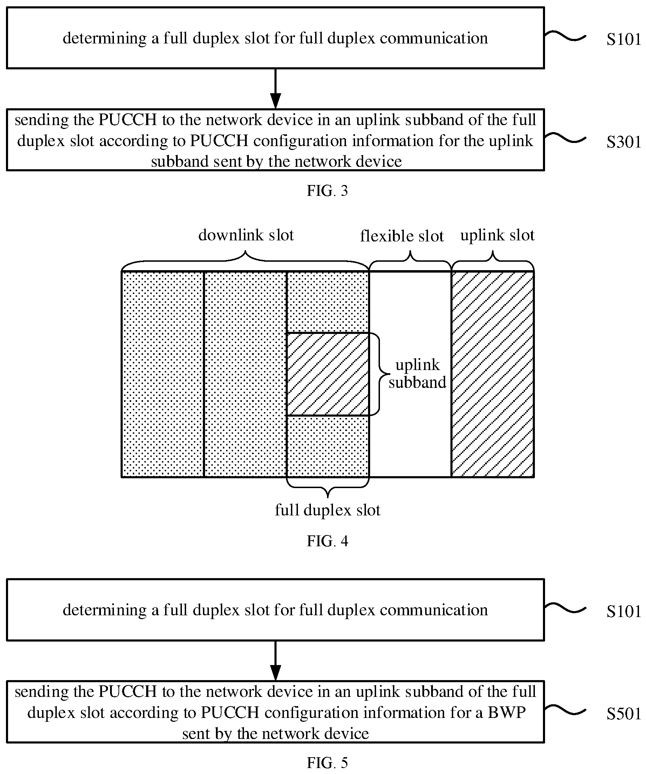

FIG. 3 is a schematic flow chart illustrating another method for sending a PUCCH according to an embodiment of the present disclosure. As shown in FIG. 3, sending the PUCCH to the network device in the full duplex slot according to the PUCCH configuration information sent by the network device includes a following step.

In step S301, the PUCCH is sent to the network device in an uplink subband of the full duplex slot according to the PUCCH configuration information for the uplink subband sent by the network device.

In an embodiment, the PUCCH configuration information sent by the network device to the terminal may be configured separately for each subband, that is, the PUCCH configuration information is subband-specific. The terminal may determine PUCCH configuration information corresponding to an uplink subband in an active BWP, determine a resource for sending the PUCCH according to the PUCCH configuration information corresponding to the uplink subband, and send the PUCCH to the network on the resource determined.

It should be noted that in the related art, the network device may send PUCCH configuration information for a BWP to the terminal, in which the PUCCH configuration information is configured for each BWP (per BWP), and may be sent to the terminal via a signaling such as PUCCH-ConfigCommon, PUCCH-Config and the like.

In this embodiment, on the basis that the network device sends per BWP PUCCH configuration information to the terminal, subband specific PUCCH configuration information is additionally sent to the terminal, and may be sent to the terminal via a RRC signaling, for example. In an embodiment, the PUCCH configuration information of the uplink subband is different from or the same as the PUCCH configuration information of the BWP. That is, the per BWP PUCCH configuration information may be the same as or different from the subband specific PUCCH configuration information, which is not limited in the present disclosure.

FIG. 4 is a schematic diagram illustrating a slot structure according to an embodiment of the present disclosure.

As shown in FIG. 4, for example, according to a TDD UL-DL configuration sent by the network device, the terminal determines that the slot structure is DDDSU, in which D represents downlink, U represents uplink, and S represents flexible. That is, first three slots in five slots are downlink slots, a fourth slot in the five slots is a flexible slot, and a fifth slot in the five slots is an uplink slot. The terminal further determines that a transmission direction on the flexible slot is downlink.

In a case that it is determined that a third slot in the five slots is a full duplex slot, taking an uplink subband being within an active downlink BWP as an example, the terminal may determine a resource for sending the PUCCH in the full duplex slot according to subband specific PUCCH configuration information. Moreover, in a case that the fifth slot is a non-full-duplex uplink slot, the terminal may determine the resource for sending the PUCCH in the uplink slot according to per BWP PUCCH configuration information (PUCCH configuration information corresponding to an active BWP).

That is, in a case that the network device configures the subband specific PUCCH configuration information and the per BWP PUCCH configuration information for the terminal, the terminal may determine the resource for sending the PUCCH based on the subband specific PUCCH configuration information in the full duplex slot, and may determine the resource for sending the PUCCH based on the per BWP PUCCH configuration information in the non-full-duplex slot.

FIG. 5 is a schematic flow chart illustrating another method for sending a PUCCH according to an embodiment of the present disclosure. As shown in FIG. 5, sending the PUCCH to the network device in the full duplex slot according to the PUCCH configuration information sent by the network device includes the following steps.

In step S501, the PUCCH is sent to the network device in an uplink subband of the full duplex slot according to PUCCH configuration information for a BWP sent by the network device.

In an embodiment, the PUCCH configuration information sent by the network device to the terminal may be configured separately for each BWP, that is, the PUCCH configuration information is configured separately for each BWP (per BWP). The terminal may determine PUCCH configuration information corresponding to an active BWP, and determine a resource for sending the PUCCH according to the PUCCH configuration information corresponding to the active BWP, and send the PUCCH to the network on the resource determined.

Different from the embodiment shown in FIG. 3, in this embodiment, since the network device only configures per BWP PUCCH configuration information for the terminal, the terminal determines the resource for sending the PUCCH based on the per BWP PUCCH configuration information (the PUCCH configuration information corresponding to the active BWP) in both the full duplex slot and a non-full-duplex slot.

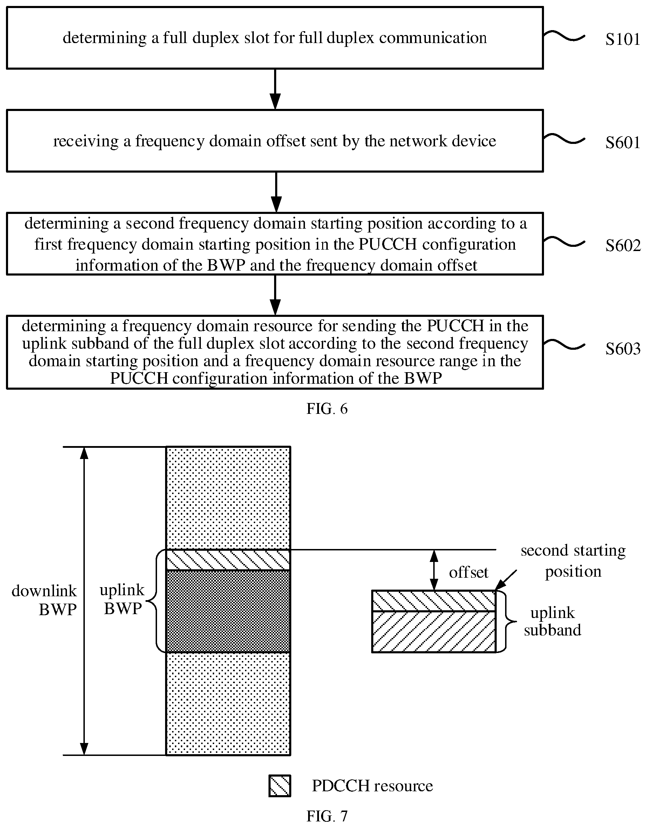

FIG. 6 is a schematic flow chart illustrating another method for sending a PUCCH according to an embodiment of the present disclosure. As shown in FIG. 6, sending the PUCCH to the network device in the uplink subband of the full duplex slot according to the PUCCH configuration information for the BWP sent by the network device includes the following steps.

In step S601, a frequency domain offset sent by the network device is received.

In step S602, a second frequency domain starting position is determined according to a first frequency domain starting position in the PUCCH configuration information of the BWP and the frequency domain offset.

In step S603, a frequency domain resource for sending the PUCCH in the uplink subband of the full duplex slot is determined according to the second frequency domain starting position and a frequency domain resource range in the PUCCH configuration information of the BWP.

In an embodiment, the network device may indicate the frequency domain offset to the terminal; and the terminal may determine the first frequency domain starting position and the frequency domain resource range for sending the PUCCH based on the PUCCH configuration information of the BWP, determine the second frequency domain starting position according to the frequency domain offset, and then send the PUCCH to the network device within the frequency domain resource range determined, starting from the second frequency domain resource starting position in the full duplex slot.

FIG. 7 is a schematic diagram illustrating a second frequency domain starting position according to an embodiment of the present disclosure.

As shown in FIG. 7, in an embodiment, in a case that the first frequency domain starting position determined according to the PUCCH configuration information is not in the uplink subband, the network device may indicate the frequency domain offset to the terminal, such that the second frequency domain starting position determined by the terminal according to the frequency domain offset indicated is within the uplink subband (in order to conveniently express a frequency domain relationship in the figure, the uplink subband and an uplink BWP are shown staggered in a time domain, and in fact, time domain resources of the uplink subband and the uplink BWP may be the same). Therefore, the terminal may send the PUCCH to the network device within the uplink subband by taking the second frequency domain starting position within the uplink subband as a frequency domain starting position of the PUCCH.

For example, the frequency domain resource is represented by a resource block (RB). According to the PUCCH configuration information of the BWP, the first frequency domain starting position for sending the PUCCH is determined to be an RB with an index of n, in which the frequency domain resource range includes 10 RBs, and the time domain resource includes 14 orthogonal frequency division multiplexing (OFDM) symbols.

In a case that a starting position of the uplink BWP is also the RB with the index of n while a starting position of the uplink subband is an RB with an index of n+10, the resource for the PUCCH is only within the uplink BWP but not within the uplink subband. In this regard, the network device may indicate that the offset includes 10 RBs. Accordingly, the second frequency domain starting position determined by the terminal is the RB with the index of n+10, that is, the starting position of the uplink subband, such that the terminal may send the PUCCH in the uplink subband.

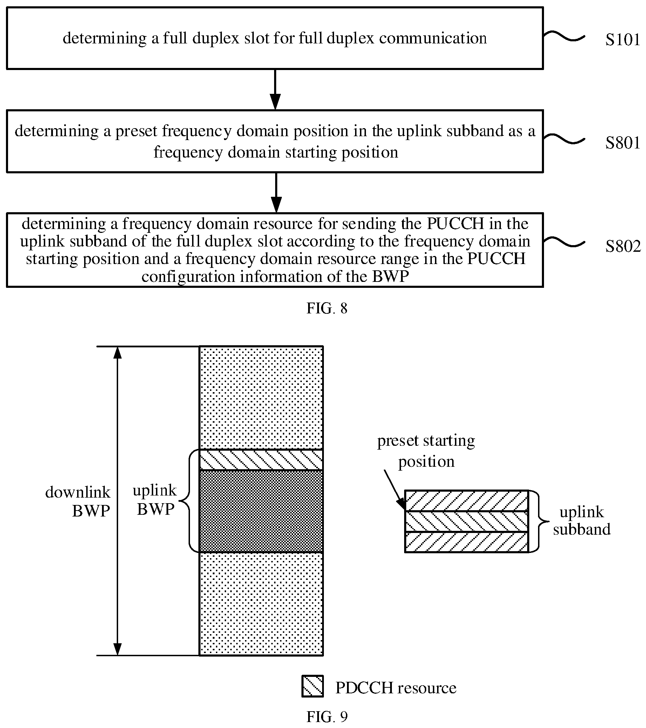

FIG. 8 is a schematic flow chart illustrating another method for sending a PUCCH according to an embodiment of the present disclosure. As shown in FIG. 8, sending the PUCCH to the network device in the uplink subband of the full duplex slot according to the PUCCH configuration information for the BWP sent by the network device includes the following steps.

In step S801, a preset frequency domain position in the uplink subband is determined as a frequency domain starting position.

In step S802, a frequency domain resource for sending the PUCCH in the uplink subband of the full duplex slot is determined according to the frequency domain starting position and a frequency domain resource range in the PUCCH configuration information of the BWP.

In an embodiment, the network device and the terminal may pre-determine the preset frequency domain position in the uplink subband. For example, the preset frequency domain position in the uplink subband may be determined based on a protocol agreement, or may be pre-indicated by the network device. The terminal may take the preset frequency domain position in the uplink subband as the frequency domain starting position, and sends the PUCCH to the network device within the frequency domain resource range determined according to the PUCCH configuration information of the BWP, starting from the frequency domain starting position in the full duplex slot.

FIG. 9 is a schematic diagram illustrating another second frequency domain starting position according to an embodiment of the present disclosure.

As shown in FIG. 9, in an embodiment, since a frequency domain starting position determined according to the PUCCH configuration information is not within the uplink subband in some cases, the terminal may send the PUCCH to the network device outside the uplink subband, which may cause some technical problems. In this embodiment, the preset frequency domain position in the uplink subband is determined as the frequency domain starting position, such that the terminal takes the preset frequency domain position in the uplink subband as the frequency domain starting position of the PUCCH, thus the terminal may send the PUCCH to the network device in the uplink subband.

The preset frequency domain position may be any frequency domain position in the uplink subband, which is not limited in the present disclosure. For example, the frequency domain resource is represented by an RB, with each RB corresponding to an index, and the preset frequency domain position may be a lowest RB in the uplink subband, that is, an RB with a minimum index.

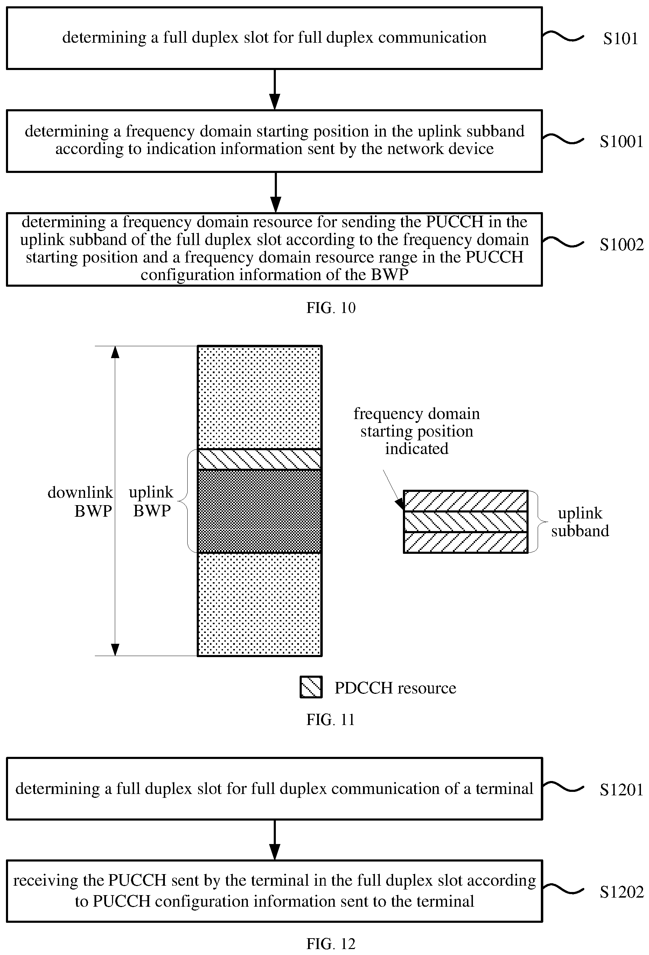

FIG. 10 is a schematic flow chart illustrating another method for sending a PUCCH according to an embodiment of the present disclosure. As shown in FIG. 10, sending the PUCCH to the network device in the uplink subband of the full duplex slot according to the PUCCH configuration information for the BWP sent by the network device includes the following steps.

In step S1001, a frequency domain starting position in the uplink subband is determined according to indication information sent by the network device.

In step S1002, a frequency domain resource for sending the PUCCH in the uplink subband of the full duplex slot is determined according to the frequency domain starting position and a frequency domain resource range in the PUCCH configuration information of the BWP.

In an embodiment, the network device may determine the frequency domain starting position in the uplink subband according to the indication information, and the terminal may determine the frequency domain resource range according to the PUCCH configuration information of the BWP, and may send the PUCCH to the network device within the frequency domain resource range determined, starting from the frequency domain starting position indicated by the network device, in the full duplex slot.

FIG. 11 is a schematic diagram illustrating another second frequency domain starting position according to an embodiment of the present disclosure.

As shown in FIG. 11, in an embodiment, since a frequency domain starting position determined according to the PUCCH configuration information is not within the uplink subband in some cases, the terminal may send the PUCCH to the network device outside the uplink subband, which may cause some technical problems. In this embodiment, the network device indicates a frequency domain starting position in the uplink subband to the terminal, such that the terminal takes the frequency domain starting position in the uplink subband indicated by the network device as a frequency domain starting position of the PUCCH, thus the terminal may send the PUCCH to the network device in the uplink subband.

Embodiments of the present disclosure further provide a transceiving system for a PUCCH, including a terminal and a network device, in which the terminal is configured to implement the method for sending the PUCCH of any of the above-mentioned embodiments, and the network device is configured to implement the method for receiving the PUCCH of any of the above-mentioned embodiments.

FIG. 12 is a schematic flow chart illustrating a method for receiving a PUCCH according to an embodiment of the present disclosure. The method for receiving the PUCCH shown in this embodiment may be performed by a network device, and the network device may communicate with a terminal. The network device includes, but is not limited to, base stations in communication systems such as a 4G base station, a 5G base station, a 6G base station, etc. The terminal includes, but is not limited to, communication apparatuses such as a mobile phone, a tablet computer, a wearable device, a sensor, an Internet of Things device, etc.

As shown in FIG. 12, the method for receiving the PUCCH may include the following steps.

In step S1201, a full duplex slot for full duplex communication of the terminal is determined.

In step S1202, the PUCCH sent by the terminal is received in the full duplex slot according to PUCCH configuration information sent to the terminal.

In an embodiment, the terminal may first determine the full duplex slot for the full duplex communication, which may also be referred to as an SBFD slot.

The full duplex slot includes at least one of:
a downlink slot including an uplink subband;
a flexible slot including an uplink subband;
an uplink slot including a downlink subband; or
a flexible slot including a downlink subband.

For example, in the downlink slot including the uplink subband, the terminal may perform uplink communication in the uplink subband and perform downlink communication in a frequency domain resource other than the uplink subband, thereby implementing the full duplex communication. For example, in the flexible slot including the uplink subband, the terminal may perform the uplink communication in the uplink subband and perform the downlink communication in a frequency domain resource other than the uplink subband, thereby implementing the full duplex communication. For example, in the uplink slot including the downlink subband, the terminal may perform the downlink communication in the downlink subband and perform the uplink communication in a frequency domain resource other than the downlink subband, thereby implementing the full duplex communication. For example, in the flexible slot including the downlink subband, the terminal may perform the downlink communication in the downlink subband and perform the uplink communication in a frequency domain resource other than the downlink subband, thereby implementing the full duplex communication.

According to embodiments of the present disclosure, the PUCCH configuration information sent by the network device is applicable to how the terminal determines to send the PUCCH in the full duplex slot, such that the terminal may send the PUCCH to the network device in the full duplex slot according to the PUCCH. For example, the terminal may send the PUCCH to the network device in the uplink subband of the downlink slot, rather than only sending the PUCCH to the network device in the uplink slot, which is beneficial to improving the flexibility of the terminal for the uplink communication.

In an embodiment, the PUCCH configuration information may be a PUCCH configuration information set (or referred to as a PUCCH resource set) that includes multiple pieces of PUCCH configuration information, and each piece of PUCCH configuration information includes, but is not limited to, a time domain resource, a frequency domain resource (e.g. a frequency domain starting position, a frequency domain resource range), hop information and the like of the PUCCH.

In an embodiment, the PUCCH configuration information includes the PUCCH configuration information set, and sending the PUCCH to the network device in the full duplex slot includes: receiving the PUCCH sent by the terminal in the full duplex slot according to the PUCCH configuration information determined by the terminal in the PUCCH configuration information set.

The terminal determines the PUCCH configuration information in the PUCCH configuration information set, and the terminal may determine the PUCCH configuration information autonomously, or according to an instruction of the network device.

In an embodiment, the full duplex slot includes the downlink slot including the uplink subband, in which the uplink subband is wholly included in an active downlink BWP, or partly included in an active downlink BWP, or not included in an active downlink BWP. Furthermore, a frequency domain resource for sending the PUCCH determined according to the PUCCH configuration information may be wholly within the uplink subband, or partially within the uplink subband, or wholly outside the uplink subband, which is not limited in the present disclosure.

In an embodiment, receiving the PUCCH sent by the terminal in the full duplex slot according to the PUCCH configuration information sent to the terminal includes: receiving the PUCCH sent by the terminal in the uplink subband of the full duplex slot according to PUCCH configuration information for the uplink subband sent to the terminal.

In an embodiment, the PUCCH configuration information sent by the network device to the terminal may be configured separately for each subband, that is, the PUCCH configuration information is subband-specific. The terminal may determine PUCCH configuration information corresponding to an uplink subband in an active BWP, determine a resource for sending the PUCCH according to the PUCCH configuration information corresponding to the uplink subband, and send the PUCCH to the network on the resource determined.

It should be noted that in the related art, the network device may send PUCCH configuration information for a BWP to the terminal, in which the PUCCH configuration information is configured for each BWP (per BWP), and may be sent to the terminal via a signaling such as PUCCH-ConfigCommon, PUCCH-Config and the like.

In this embodiment, on the basis that the network device sends per BWP PUCCH configuration information to the terminal, subband specific PUCCH configuration information is additionally sent to the terminal, and may be sent to the terminal via a RRC signaling, for example. In an embodiment, the PUCCH configuration information of the uplink subband is different from or the same as the PUCCH configuration information of the BWP. That is, the per BWP PUCCH configuration information may be the same as or different from the subband specific PUCCH configuration information, which is not limited in the present disclosure.

In an embodiment, receiving the PUCCH sent by the terminal in the full duplex slot according to the PUCCH configuration information sent to the terminal includes: receiving the PUCCH sent by the terminal in the uplink subband of the full duplex slot according to the PUCCH configuration information for the BWP sent to the terminal.

In an embodiment, the PUCCH configuration information sent by the network device to the terminal may be configured separately for each BWP, that is, the PUCCH configuration information is configured separately for each BWP (per BWP). The terminal may determine the PUCCH configuration information corresponding to the active BWP, and determine the resource for sending the PUCCH according to the PUCCH configuration information corresponding to the active BWP, and send the PUCCH to the network on the resource determined.

Different from the previous embodiment relating to the subband specific PUCCH configuration information, in this embodiment, since the network device only configures the per BWP PUCCH configuration information for the terminal, the terminal determines the resource for sending the PUCCH based on the per BWP PUCCH configuration information (the PUCCH configuration information corresponding to the active BWP) in both the full duplex slot and a non-full-duplex slot.

In an embodiment, the method further includes: sending a frequency domain offset to the terminal; determining a second frequency domain starting position according to a first frequency domain starting position in the PUCCH configuration information of the BWP and the frequency domain offset; and determining a frequency domain resource for receiving the PUCCH in the uplink subband of the full duplex slot according to the second frequency domain starting position and a frequency domain resource range in the PUCCH configuration information of the BWP.

In an embodiment, the network device may indicate the frequency domain offset to the terminal; and the terminal may determine the first frequency domain starting position and the frequency domain resource range for sending the PUCCH based on the PUCCH configuration information of the BWP, determine the second frequency domain starting position according to the frequency domain offset, and then send the PUCCH to the network device within the frequency domain resource range determined, starting from the second frequency domain resource starting position in the full duplex slot.

In an embodiment, the method further includes: determining a preset frequency domain position in the uplink subband as a frequency domain starting position; and determining the frequency domain resource for receiving the PUCCH in the uplink subband of the full duplex slot according to the frequency domain starting position and the frequency domain resource range in the PUCCH configuration information of the BWP.

In an embodiment, the network device and the terminal may pre-determine the preset frequency domain position in the uplink subband. For example, the preset frequency domain position in the uplink subband may be determined based on a protocol agreement, or may be pre-indicated by the network device. The terminal may take the preset frequency domain position in the uplink subband as the frequency domain starting position, and sends the PUCCH to the network device within the frequency domain resource range determined according to the PUCCH configuration information of the BWP, starting from the frequency domain starting position in the full duplex slot.

In an embodiment, the method further includes: sending indication information to the terminal, in which the indication information indicates a frequency domain starting position in the uplink subband; and determining the frequency domain resource for receiving the PUCCH in the uplink subband of the full duplex slot according to the frequency domain starting position and the frequency domain resource range in the PUCCH configuration information of the BWP.

In an embodiment, the network device may determine the frequency domain starting position in the uplink subband according to the indication information, and the terminal may determine the frequency domain resource range according to the PUCCH configuration information of the BWP, and may send the PUCCH to the network device within the frequency domain resource range determined, starting from the frequency domain starting position indicated by the network device, in the full duplex slot.

Corresponding to the foregoing embodiments of the method for sending the PUCCH and the method for receiving the PUCCH, the present disclosure further provides embodiments of an apparatus for sending the PUCCH and an apparatus for receiving the PUCCH.

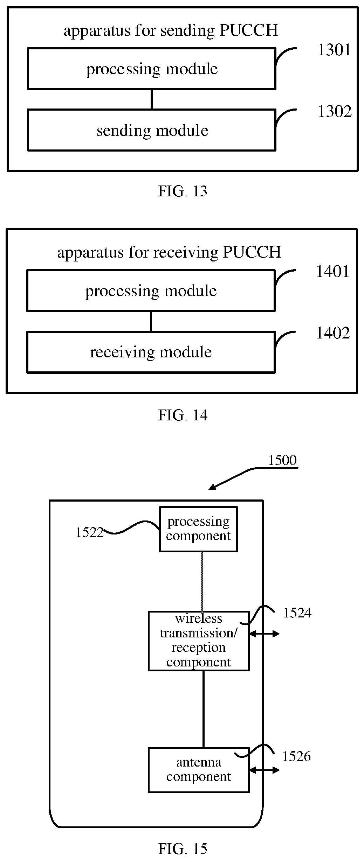

FIG. 13 is a schematic block diagram illustrating an apparatus for sending a PUCCH according to an embodiment of the present disclosure. The apparatus for sending the PUCCH shown in this embodiment may be a terminal, or an apparatus formed by modules in a terminal. The terminal includes, but is not limited to, a communication apparatus such as a mobile phone, a tablet computer, a wearable device, a sensor, an Internet of Things device, etc. The terminal may communicate with a network device including, but not limited to, network devices in 4G, 5G, 6G, etc. communication systems, such as a base station, a core network, etc.

As shown in FIG. 13, the apparatus for sending the PUCCH includes:
a processing module 1301 configured to determine a full duplex slot for full duplex communication; and
a sending module 1302 configured to send the PUCCH to the network device in the full duplex slot according to PUCCH configuration information sent by the network device.

In an embodiment, the full duplex slot includes at least one of: a downlink slot including an uplink subband; a flexible slot including an uplink subband; an uplink slot including a downlink subband; or a flexible slot including a downlink subband.

In an embodiment, the full duplex slot includes the downlink slot including the uplink subband, in which the uplink subband is wholly included in an active downlink BWP, or partly included in an active downlink BWP, or not included in an active downlink BWP.

In an embodiment, the sending module is configured to send the PUCCH to the network device in an uplink subband of the full duplex slot according to PUCCH configuration information for the uplink subband sent by the network device.

In an embodiment, the PUCCH configuration information of the uplink subband is different from or the same as PUCCH configuration information of a BWP.

In an embodiment, the sending module is configured to send the PUCCH to the network device in the uplink subband of the full duplex slot according to the PUCCH configuration information for the BWP sent by the network device.

In an embodiment, the apparatus further includes: a receiving module configured to receive a frequency domain offset sent by the network device, in which the processing module is configured to determine a second frequency domain starting position according to a first frequency domain starting position in the PUCCH configuration information of the BWP and the frequency domain offset, and determine a frequency domain resource for sending the PUCCH in the uplink subband of the full duplex slot according to the second frequency domain starting position and a frequency domain resource range in the PUCCH configuration information of the BWP.

In an embodiment, the processing module is further configured to determine a preset frequency domain position in the uplink subband as a frequency domain starting position, and determine the frequency domain resource for sending the PUCCH in the uplink subband of the full duplex slot according to the frequency domain starting position and the frequency domain resource range in the PUCCH configuration information of the BWP.

In an embodiment, the processing module is further configured to determine a frequency domain starting position in the uplink subband according to indication information sent by the network device, and determine the frequency domain resource for sending the PUCCH in the uplink subband of the full duplex slot according to the frequency domain starting position and the frequency domain resource range in the PUCCH configuration information of the BWP.

In an embodiment, the sending module is configured to determine the PUCCH configuration information in a PUCCH configuration information set, and send the PUCCH to the network device in the full duplex slot according to the PUCCH configuration information determined.

FIG. 14 is a schematic block diagram illustrating an apparatus for receiving a PUCCH according to an embodiment of the present disclosure. The apparatus for receiving the PUCCH shown in this embodiment may be a network device, or an apparatus formed by modules in a network device. The network device includes, but is not limited to, network devices in 4G, 5G, 6G, etc. communication systems, such as a base station, a core network, etc. The network device may communicate with a terminal including, but not limited to, a communication apparatus such as a mobile phone, a tablet computer, a wearable device, a sensor, an Internet of Things device, etc.

As shown in FIG. 14, the apparatus for receiving the PUCCH includes:
a processing module 1401 configured to determine a full duplex slot for full duplex communication of the terminal; and
a receiving module 1402 configured to receive the PUCCH sent by the terminal in the full duplex slot according to PUCCH configuration information sent to the terminal.

In an embodiment, the full duplex slot includes at least one of: a downlink slot including an uplink subband; a flexible slot including an uplink subband; an uplink slot including a downlink subband; or a flexible slot including a downlink subband.

In an embodiment, the full duplex slot includes the downlink slot including the uplink subband, in which the uplink subband is wholly included in an active downlink BWP, or partly included in an active downlink BWP, or not included in an active downlink BWP.

In an embodiment, the receiving module is configured to receive the PUCCH sent by the terminal in an uplink subband of the full duplex slot according to PUCCH configuration information for the uplink subband sent to the terminal.

In an embodiment, the PUCCH configuration information of the uplink subband is different from or the same as PUCCH configuration information of a BWP.

In an embodiment, the receiving module is configured to receive the PUCCH sent by the terminal in an uplink subband of the full duplex slot according to PUCCH configuration information for a BWP sent to the terminal.

In an embodiment, the apparatus further includes: a sending module configured to send a frequency domain offset to the terminal, in which the processing module is configured to determine a second frequency domain starting position according to a first frequency domain starting position in the PUCCH configuration information of the BWP and the frequency domain offset, and determine a frequency domain resource for receiving the PUCCH in the uplink subband of the full duplex slot according to the second frequency domain starting position and a frequency domain resource range in the PUCCH configuration information of the BWP.

In an embodiment, the processing module is further configured to determine a preset frequency domain position in the uplink subband as a frequency domain starting position, and determine a frequency domain resource for receiving the PUCCH in the uplink subband of the full duplex slot according to the frequency domain starting position and the frequency domain resource range in the PUCCH configuration information of the BWP.

In an embodiment, the apparatus further includes: a sending module configured to send indication information to the terminal, in which the indication information indicates a frequency domain starting position in the uplink subband. The processing module is further configured to determine a frequency domain resource for receiving the PUCCH in the uplink subband of the full duplex slot according to the frequency domain starting position and a frequency domain resource range in the PUCCH configuration information of the BWP.

In an embodiment, the receiving module is configured to receive the PUCCH sent by the terminal in the full duplex slot according to the PUCCH configuration information determined by the terminal in a PUCCH configuration information set.

With respect to the apparatuses in the above embodiments, the specific manners for performing operations for individual modules therein have been described in detail in the embodiments regarding the methods, which will not be elaborated herein.

Since the apparatus embodiments substantially correspond to the method embodiments, reference may made to the partial description of the method embodiments. The above-described apparatus embodiments are merely for the purpose of illustration, in which the modules described as separate components may be or may not be physically separated, and the components serving as display modules may be or may not be physical modules, that is, either located at one place or distributed onto a plurality of network modules. The objective of embodiments of the present disclosure may be achieved by selecting some or all of the modules in accordance with practical requirements. It would be appreciated and executable by those skilled in the art without creative efforts.

Embodiments of the present disclosure further provide a communication apparatus, including: a processor; and a memory for storing a computer program. The computer program, when executed by the processor, implements the method for sending the PUCCH according to any of the above embodiments.

Embodiments of the present disclosure further provide a communication apparatus, including: a processor; and a memory for storing a computer program. The computer program, when executed by the processor, implements the method for receiving the PUCCH according to any of the above embodiments.

Embodiments of the present disclosure further provide a computer-readable storage medium, configured to store a computer program that, when executed by a processor, implements the method for sending the PUCCH according to any of the above embodiments.

Embodiments of the present disclosure further provide a computer-readable storage medium, configured to store a computer program that, when executed by a processor, implements the method for receiving the PUCCH according to any of the above embodiments.

As shown in FIG. 15, FIG. 15 is a schematic block diagram illustrating an apparatus 1500 for sending a PUCCH according to an embodiment of the present disclosure. The apparatus 1500 may be provided as a base station. Referring to FIG. 15, the apparatus 1500 includes a processing component 1522, a wireless transmission/reception component 1524, an antenna component 1526, and a signal processing part specific to a wireless interface. The processing component 1522 may further include one or more processors. One of the processors in the processing component 1522 may be configured to perform the method for receiving the PUCCH according to any of the above embodiments.

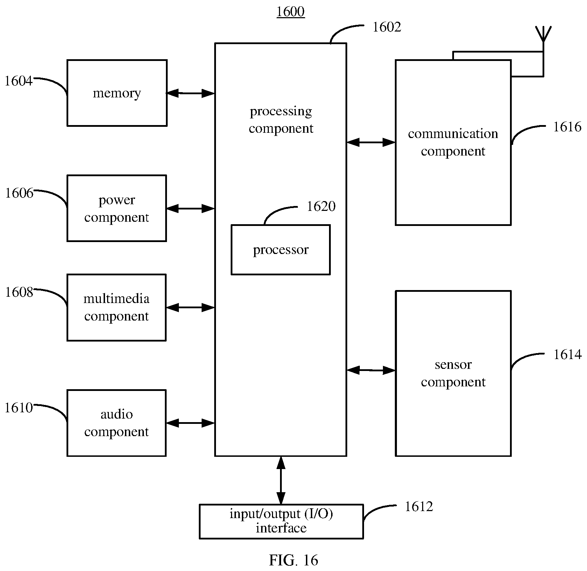

FIG. 16 is a schematic block diagram illustrating an apparatus 1600 for receiving a PUCCH according to an embodiment of the present disclosure. For example, the apparatus 1600 may be a mobile phone, a computer, a digital broadcast terminal, a messaging device, a game console, a tablet device, a medical device, a fitness device, a personal digital assistant, or the like.

Referring to FIG. 16, the apparatus 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the apparatus 1600, such as the operations associated with display, phone calls, data communications, camera operations, and recording operations. The processing component 1602 may include one or more processors 1620 to execute instructions to perform all or some of the steps in the method for sending the PUCCH. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operations of the apparatus 1600. Examples of such data include instructions for any applications or methods operated on the apparatus 1600, contact data, phonebook data, messages, pictures, videos, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and/or the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as keyboards, click wheels, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may further include a light sensor, such as a CMOS or CCD image sensor, for use in imaging applications. In some embodiments, the sensor component 1614 may further include an accelerometer sensor, a gyroscope sensor, a magnetic sensor, a pressure sensor, or a temperature sensor.

The communication component 1616 is configured to facilitate communication, wired or wireless, between the apparatus 1600 and other devices. The apparatus 1600 may access a wireless network based on a communication standard, such as Wi-Fi, 2G, 3G, 4G LTE or 5G NR or a combination thereof. In an illustrative embodiment, the communication component 1616 receives a broadcast signal or broadcast associated information from an external broadcast management system via a broadcast channel. In an illustrative embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for performing the method for sending the PUCCH described above.

In an illustrative embodiment, there is also provided a non-transitory computer readable storage medium including instructions, such as the memory 1604 including instructions, and the instructions are executable by the processor 1620 in the apparatus 1600, for completing the method for sending the PUCCH described above. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such process, method, article or device. Without further restrictions, an element defined by the statement "including a..." does not exclude the existence of another identical element in the process, method, article or device that includes the element.

The methods and apparatuses provided by the embodiments of the present disclosure have been described in detail above, and specific examples are used to illustrate the principle and implementation of the present disclosure. The description of the above embodiments is only used to help understand the methods and core ideas of the present disclosure. At the same time, for those skilled in the art, there will be some changes in the specific implementation and application scope according to the idea of the present disclosure. In summary, the content of the specification should not be construed as a limitation to the present disclosure.

## Claims

1. A method for sending a physical uplink control channel (PUCCH), performed by a terminal, comprising:
determining a full duplex slot for full duplex communication; and
sending the PUCCH to a network device in the full duplex slot according to PUCCH configuration information sent by the network device.

2. The method of claim 1, wherein the full duplex slot comprises at least one of:
a downlink slot comprising an uplink subband;
a flexible slot comprising an uplink subband;
an uplink slot comprising a downlink subband; or
a flexible slot comprising a downlink subband.

3. The method of claim 2, wherein the full duplex slot comprises the downlink slot comprising the uplink subband, wherein the uplink subband is wholly comprised in an active downlink bandwidth part (BWP), or partly comprised in an active downlink BWP, or not comprised in an active downlink BWP.

4. The method of claim 2, wherein sending the PUCCH to the network device in the full duplex slot according to the PUCCH configuration information sent by the network device comprises:
sending the PUCCH to the network device in an uplink subband of the full duplex slot according to PUCCH configuration information for the uplink subband sent by the network device.

5. The method of claim 4, wherein the PUCCH configuration information of the uplink subband is different from or the same as PUCCH configuration information of a BWP.

6. The method of claim 2, wherein sending the PUCCH to the network device in the full duplex slot according to the PUCCH configuration information sent by the network device comprises:
sending the PUCCH to the network device in an uplink subband of the full duplex slot according to PUCCH configuration information for a BWP sent by the network device.

7. The method of claim 6, wherein sending the PUCCH to the network device in the uplink subband of the full duplex slot according to the PUCCH configuration information for the BWP sent by the network device comprises:
receiving a frequency domain offset sent by the network device;
determining a second frequency domain starting position according to a first frequency domain starting position in the PUCCH configuration information of the BWP and the frequency domain offset; and
determining a frequency domain resource for sending the PUCCH in the uplink subband of the full duplex slot according to the second frequency domain starting position and a frequency domain resource range in the PUCCH configuration information of the BWP.

8. The method of claim 6, wherein sending the PUCCH to the network device in the uplink subband of the full duplex slot according to the PUCCH configuration information for the BWP sent by the network device comprises:
determining a preset frequency domain position in the uplink subband as a frequency domain starting position; and
determining a frequency domain resource for sending the PUCCH in the uplink subband of the full duplex slot according to the frequency domain starting position and a frequency domain resource range in the PUCCH configuration information of the BWP.

9. The method of claim 6, wherein sending the PUCCH to the network device in the uplink subband of the full duplex slot according to the PUCCH configuration information for the BWP sent by the network device comprises:
determining a frequency domain starting position in the uplink subband according to indication information sent by the network device; and
determining a frequency domain resource for sending the PUCCH in the uplink subband of the full duplex slot according to the frequency domain starting position and a frequency domain resource range in the PUCCH configuration information of the BWP.

10. The method of any one of claims 1 to 9, wherein the PUCCH configuration information comprises a PUCCH configuration information set, and sending the PUCCH to the network device in the full duplex slot comprises:
determining the PUCCH configuration information in the PUCCH configuration information set; and
sending the PUCCH to the network device in the full duplex slot according to the PUCCH configuration information determined.

11. A method for receiving a physical uplink control channel (PUCCH), performed by a network device, comprising:
determining a full duplex slot for full duplex communication of a terminal; and
receiving the PUCCH sent by the terminal in the full duplex slot according to PUCCH configuration information sent to the terminal.

12. The method of claim 11, wherein the full duplex slot comprises at least one of:
a downlink slot comprising an uplink subband;
a flexible slot comprising an uplink subband;
an uplink slot comprising a downlink subband; or
a flexible slot comprising a downlink subband.

13. The method of claim 12, wherein the full duplex slot comprises the downlink slot comprising the uplink subband, wherein the uplink subband is wholly comprised in an active downlink bandwidth part (BWP), or partly comprised in an active downlink BWP, or not comprised in an active downlink BWP.

14. The method of claim 12, wherein receiving the PUCCH sent by the terminal in the full duplex slot according to the PUCCH configuration information sent to the terminal comprises:
receiving the PUCCH sent by the terminal in an uplink subband of the full duplex slot according to PUCCH configuration information for the uplink subband sent to the terminal.

15. The method of claim 14, wherein the PUCCH configuration information of the uplink subband is different from or the same as PUCCH configuration information of a BWP.

16. The method of claim 12, wherein receiving the PUCCH sent by the terminal in the full duplex slot according to the PUCCH configuration information sent to the terminal comprises:
receiving the PUCCH sent by the terminal in an uplink subband of the full duplex slot according to PUCCH configuration information for a BWP sent to the terminal.

17. The method of claim 16, further comprising:
sending a frequency domain offset to the terminal;
determining a second frequency domain starting position according to a first frequency domain starting position in the PUCCH configuration information of the BWP and the frequency domain offset; and
determining a frequency domain resource for receiving the PUCCH in the uplink subband of the full duplex slot according to the second frequency domain starting position and a frequency domain resource range in the PUCCH configuration information of the BWP.

18. The method of claim 16, further comprising:
determining a preset frequency domain position in the uplink subband as a frequency domain starting position; and
determining a frequency domain resource for receiving the PUCCH in the uplink subband of the full duplex slot according to the frequency domain starting position and a frequency domain resource range in the PUCCH configuration information of the BWP.

19. The method of claim 16, further comprising:
sending indication information to the terminal, wherein the indication information indicates a frequency domain starting position in the uplink subband; and
determining a frequency domain resource for receiving the PUCCH in the uplink subband of the full duplex slot according to the frequency domain starting position and a frequency domain resource range in the PUCCH configuration information of the BWP.

20. The method of any one of claims 11 to 19, wherein the PUCCH configuration information comprises a PUCCH configuration information set, and receiving the PUCCH sent by the terminal in the full duplex slot comprises:
receiving the PUCCH sent by the terminal in the full duplex slot according to the PUCCH configuration information determined by the terminal in the PUCCH configuration information set.

21. A transceiving system for a physical uplink control channel (PUCCH), comprising a terminal and a network device, wherein the terminal is configured to implement the method for sending the PUCCH of any one of claims 1 to 10, and the network device is configured to implement the method for receiving the PUCCH of any one of claims 11 to 20.

22. An apparatus for sending a physical uplink control channel (PUCCH), comprising:
a processing module configured to determine a full duplex slot for full duplex communication; and
a sending module configured to send the PUCCH to a network device in the full duplex slot according to PUCCH configuration information sent by the network device.

23. An apparatus for receiving a physical uplink control channel (PUCCH), comprising:
a processing module configured to determine a full duplex slot for full duplex communication of a terminal; and
a receiving module configured to receive the PUCCH sent by the terminal in the full duplex slot according to PUCCH configuration information sent to the terminal.

24. A communication apparatus, comprising:
a processor; and
a memory for storing a computer program,
wherein the computer program, when executed by the processor, implements the method for sending the physical uplink control channel (PUCCH) according to any one of claims 1 to 10.

25. A communication apparatus, comprising:
a processor; and
a memory for storing a computer program,
wherein the computer program, when executed by the processor, implements the method for receiving the physical uplink control channel (PUCCH) according to any one of claims 11 to 20.

26. A computer-readable storage medium, configured to store a computer program that, when executed by a processor, implements the method for sending the physical uplink control channel (PUCCH) according to any one of claims 1 to 10.

27. A computer-readable storage medium, configured to store a computer program that, when executed by a processor, implements the method for receiving the physical uplink control channel (PUCCH) according to any one of claims 11 to 20.
